# EUROPEAN PATENT APPLICATION

(11) **EP 4 489 170 A1**
(43) Date of publication of application: **08.01.2025**
(21) Application number: 22928839.4
(22) Date of filing: 30.09.2022
(51) Int. Cl.: H01M 10/0562, H01B 1/08, H01M 4/134, H01M 4/38, H01M 4/525, H01M 4/66, H01M 10/052

(54) **ALL-SOLID-STATE BATTERY**

(30) Priority: 28.02.2022 JP 2022028957
(71) Applicant: TDK Corporation, Tokyo 103-6128 (JP)
(72) Inventor: SATO, Hiroshi, Tokyo 103-6128 (JP); SUZUKI, Shota, Tokyo 103-6128 (JP); OYAKE, Hisaji, Tokyo 103-6128 (JP); MUROI, Masayuki, Tokyo 103-6128 (JP)
(74) Representative: Epping - Hermann - Fischer
(86) International application number: PCT/JP2022/036674
(87) International publication number: WO 2023/162318

(57) **Abstract**

An all-solid-state battery includes a sintered body including a positive electrode, a negative electrode and a solid electrolyte layer between the positive electrode and the negative electrode, in which the solid electrolyte layer contains a first solid electrolyte having a γ-Li₃PO₄-type crystal structure, and the negative electrode contains a second solid electrolyte having a γ-Li₃PO₄-type crystal structure and one or more selected from Ag and a Ag-containing alloy.

## Description

### Technical Field

The present invention relates to an all-solid-state battery.

The present application claims priority on Japanese Patent Application No. 2022-028957 filed on February 28, 2022, the content of which is incorporated herein by reference.

### Background Art

In recent years, the development of electronics technology has been remarkable, and attempts have been made for reduction in size, weight and thickness and multi-functionalization of mobile electronic devices. Accordingly, there has been a strong desire for reduction in size, weight and thickness and improvement in reliability for batteries, which serve as power supplies of electronic devices, and all-solid-state batteries in which a solid electrolyte is used as an electrolyte have been attracting attention.

There are thin film-type all-solid-state batteries and bulk-type all-solid-state batteries. Thin film-type all-solid-state batteries are produced using a thin film technique such as a physical vapor deposition (PVD) method or a sol-gel method. Bulk-type all-solid-state batteries are produced using a powder forming method, a sintering method or the like. For individual all-solid-state batteries, applicable substances and performances vary due to differences in the manufacturing method.

For example, Patent Document 1 and Patent Document 2 disclose sintering-type all-solid-state batteries in which an oxide-based solid electrolyte is used as a solid electrolyte. In Patent Document 1 and Patent Document 2, examples are described in which titanium oxides are used as negative electrode active material layers.

### Citation List

### Patent Documents

Patent Document 1: PCT International Publication No. WO2007/135790
Patent Document 2: PCT International Publication No. WO2008/099508

### Summary of Invention

### Technical Problem

All-solid-state batteries described in Patent Documents 1 and 2 have a small output voltage and a low energy density.

The present invention has been made in consideration of the above-described problem, and an object of the present invention is to provide an all-solid-state battery having a high energy density.

### Solution to Problem

In order to achieve the aforementioned object, the following solutions are provided.
(1) An all-solid-state battery according to a first aspect includes a sintered body including a positive electrode, a negative electrode and a solid electrolyte layer between the positive electrode and the negative electrode, the solid electrolyte layer contains a first solid electrolyte having a γ-Li₃PO₄-type crystal structure, and the negative electrode contains a second solid electrolyte having a γ-Li₃PO₄-type crystal structure and one or more selected from Ag and a Ag-containing alloy.
(2) In the all-solid-state-battery according to the aspect, a volume ratio of the second solid electrolyte relative to a whole of the negative electrode may be 5% or more and 55% or less.
(3) In the all-solid-state-battery according to the aspect, the first solid electrolyte may contain Li₃₊ₓSiₓP₁₋ₓO₄ (0.2 ≤ x ≤ 0.6).
(4) In the all-solid-state-battery according to the aspect, the second solid electrolyte may contain Li₃₊ₓSiₓP₁₋ₓO₄ (0.2 ≤ x ≤ 0.6).
(5) In the all-solid-state-battery according to the aspect, the first solid electrolyte and the second solid electrolyte may include the same constituent element.
(6) In the all-solid-state-battery according to the aspect, a volume ratio of the Ag or the Ag alloy relative to a whole of the negative electrode may be 45% or more and 95% or less.
(7) In the all-solid-state-battery according to the aspect, a sum of the volume ratio of the solid electrolyte and the volume ratio of the Ag or the Ag alloy relative to a whole of the negative electrode may be 95% or more and 100% or less.
(8) In the all-solid-state-battery according to the aspect, the Ag-containing alloy may be a Li-Ag alloy.
(9) In the all-solid-state-battery according to the aspect, the positive electrode may contain lithium cobaltate.
(10) In the all-solid-state-battery according to the aspect, the positive electrode may include a current collector layer containing Ag and a positive electrode active material layer that is in contact with at least one main surface of the current collector layer. Advantageous Effects of Invention

The all-solid-state-battery according to the aspect has a high energy density.

### Brief Description of Drawings

[FIG. 1] a cross-sectional view of an all-solid-state battery according to a first embodiment.
[FIG. 2] a cross-sectional view showing a characteristic part of the all-solid-state battery according to the first embodiment in an enlarged manner.
[FIG. 3] a cross-sectional view showing the characteristic part of the all-solid-state battery of another example according to the first embodiment in an enlarged manner.
[FIG. 4] a cross-sectional view showing a characteristic part of a positive electrode of the all-solid-state battery of another example according to the first embodiment in an enlarged manner.
[FIG. 5] a cross-sectional view showing a characteristic part of the positive electrode of the all-solid-state battery of still another example according to the first embodiment in an enlarged manner.

### Description of Embodiment

Hereinafter, the present embodiment will be described in detail with appropriate reference to drawings. In the drawings to be used in the following description, there are cases where a characteristic part is shown in an enlarged manner for convenience in order to facilitate the understanding of a characteristic of the present invention, and there are cases where the dimensional ratio or the like of each constituent element is different from the actual one. Materials, dimensions and the like to be exemplified in the following description are simply examples, and the present invention is not limited thereto and can be modified as appropriate within the scope of the features of the present invention and carried out.

Directions will be defined. The lamination direction of a laminated body 4 is defined as a z direction, one direction in a plane orthogonal to the z direction is defined as an x direction, and a direction orthogonal to the x direction and the z direction is defined as a y direction. Hereinafter, there will be cases where one direction in the z direction is expressed as "up" and a direction opposite to the above-described direction is expressed as "down." Up and down do not always match the direction in which the force of gravity is applied.

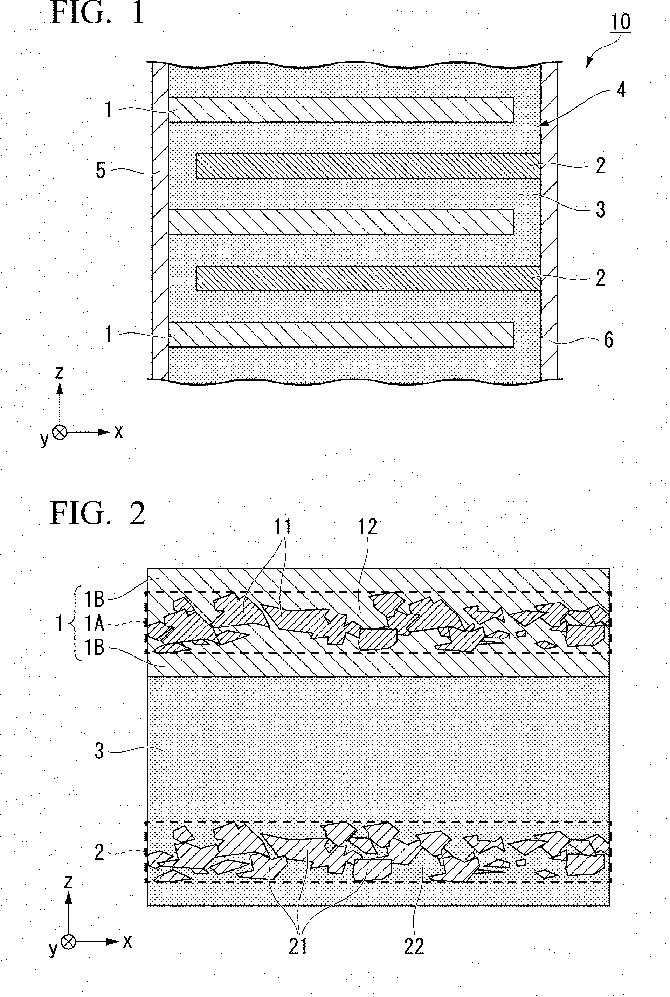

FIG. 1 is a schematic cross-sectional view of an all-solid-state battery 10 according to the present embodiment. The all-solid-state battery 10 includes the laminated body 4 and terminal electrodes 5 and 6. Each of the terminal electrodes 5 and 6 is in contact with each of the facing surfaces of the laminated body 4. The terminal electrodes 5 and 6 extend in the z direction, which intersect with (is orthogonal to) the laminate surface of the laminated body 4.

The laminated body 4 includes positive electrodes 1, negative electrodes 2 and a solid electrolyte layer 3. The laminated body 4 is a sintered body obtained by laminating and sintering the positive electrodes 1, the negative electrodes 2 and the solid electrolyte layer 3. The number of layers of the positive electrodes 1 and the negative electrodes 2 is not particularly limited. The solid electrolyte layer 3 is present at least between the positive electrode 1 and the negative electrode 2. Between the positive electrode 1 and the terminal electrode 5 and between the negative electrode 2 and the terminal electrode 6, for example, the same solid electrolyte as the solid electrolyte layer 3 is present. The positive electrodes 1 are in contact with the terminal electrode 5 at one end. The negative electrodes 2 are in contact with the terminal electrode 6 at one end.

The all-solid-state battery 10 is charged and discharged by the transfer of ions between the positive electrode 1 and the negative electrode 2 through the solid electrolyte layer 3. In FIG. 1, a stacked battery is shown, but the all-solid-state battery may be a wound battery. The all-solid-state battery 10 can be used in, for example, laminated batteries, square batteries, cylindrical batteries, coin-like batteries, button-like batteries and the like. In addition, the all-solid-state battery 10 may be an immersion type in which the solid electrolyte layer 3 is dissolved or dispersed in a solvent.

### "Positive electrode"

FIG. 2 is an enlarged view of a characteristic part of the all-solid-state battery 10 according to a first embodiment. The positive electrode 1 includes, for example, a positive electrode current collector layer 1A and positive electrode active material layers 1B. The positive electrode includes, for example, a current collector layer containing Ag and positive electrode active material layers in contact with at least one main surface of the current collector layer.

### [Positive electrode current collector layer]

The positive electrode current collector layer 1A includes, for example, a current collector 11 and a positive electrode active material 12. In this case, a space between an xy plane that passes through the uppermost part of the current collector 11 and an xy plane that passes through the lowermost part is regarded as the positive electrode current collector layer 1A.

The current collector 11 is composed of a plurality of current collector particles. The plurality of current collector particles is connected to each other and are electrically connected to each other in an xy plane. The positive electrode 1 contains a metal or alloy containing any one selected from the group consisting of Ag, Pd, Au and Pt as the current collector 11. These metals or alloys do not melt even when the laminated body 4 is heated in the atmosphere and do not easily oxidize. The current collector 11 is, for example, a AgPd alloy, Au or Pt.

The positive electrode active material 12 is present in the positive electrode current collector layer 1A together with the current collector 11 in a mixed manner. The positive electrode active material 12 is in contact with the current collector 11. When the positive electrode active material 12 is contained in the positive electrode current collector layer 1A, electrons are smoothly transferred from the positive electrode active material 12 to the current collector 11. The positive electrode active material 12 is the same as a positive electrode active material that is contained in the positive electrode active material layer 1B, which will be described below.

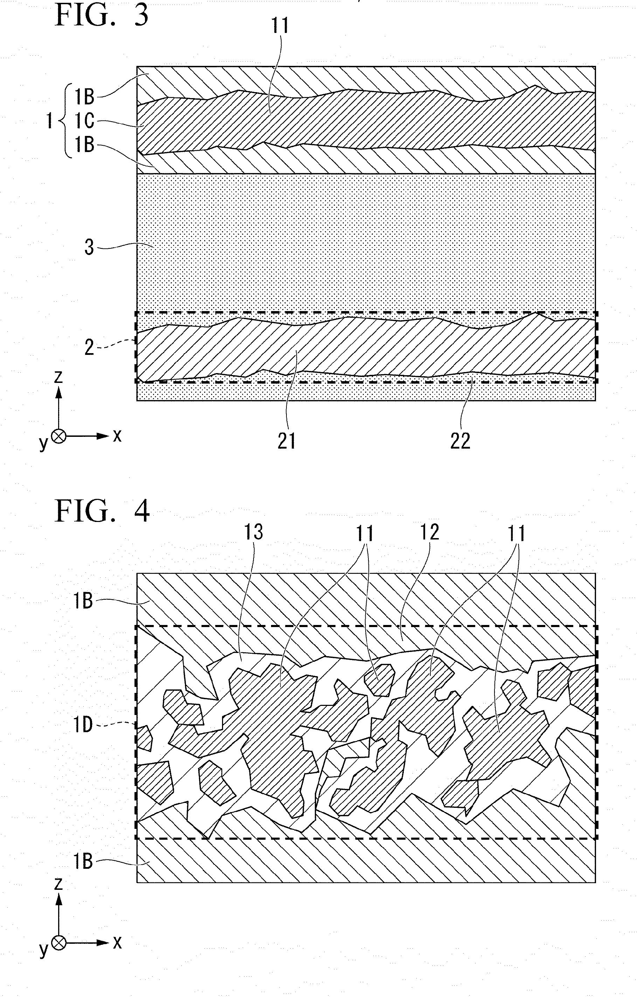

FIG. 2 shows an example where the current collector 11 is composed of a plurality of current collector particles, but the current collector is not limited to this case. FIG. 3 is an enlarged view of a characteristic part of the all-solid-state battery of another example according to the first embodiment. A positive electrode current collector layer 1C shown in FIG. 3 is composed of a current collector 11. The current collector 11 may have a form of each of a foil, a punched film or expanded film that spreads in an xy plane.

The positive electrode active material layers that are provided in the positive electrode are in contact with at least one main surface of the current collector layer. The positive electrode active material layer contains a positive electrode active material. The positive electrode active material layer may contain a conductive assistant, a binder or a solid electrolyte, which will be described below.

The thickness of the positive electrode active material layer may be set to be in a range of 1 µm or more and 500 µm or less.

### [Positive electrode active material layer]

The positive electrode active material layer 1B is formed on one surface or both surfaces of the positive electrode current collector layer 1A. The positive electrode active material layer 1B contains a positive electrode active material. The positive electrode active material layer 1B may contain a conductive assistant, a binder or the above-described solid electrolyte. In a case where the positive electrode active material layer 1B contains the solid electrolyte, a space between an xy plane that passes through the uppermost part of the positive electrode active material and an xy plane that passes through the lowermost part is regarded as the positive electrode active material layer 1B.

### (Positive electrode active material)

The positive electrode active material is not particularly limited as long as the positive electrode active material is capable of reversibly advancing the release and occlusion of lithium ions and the deintercalation and intercalation of lithium ions. For example, positive electrode active materials that are in use in well-known lithium ion secondary batteries can be used.

The positive electrode active material is, for example, a composite transition metal oxide, a transition metal fluoride, a polyanion, a transition metal sulfide, a transition metal oxyfluoride, a transition metal oxysulfide or a transition metal oxynitride. The positive electrode active material is preferably a lithium manganese composite oxide, a lithium nickel composite oxide, a lithium cobalt composite oxide, a lithium vanadium composite oxide, a lithium titanium composite oxide, manganese dioxide, titanium oxide, niobium oxide, vanadium oxide, tungsten oxide or the like. For example, the positive electrode active material is LiCoO₂ or LiMnO₂ and preferably LiCoO₂. The compositions of these compounds may deviate from stoichiometric compositions.

For example, the positive electrode active material may be lithium cobalate represented by LiₓCo0₂, and x may vary within a range of 0.4 to 1.2 in association with the charging and discharging of the all-solid-state battery.

In addition, positive electrode active materials containing no lithium can also be used as the positive electrode active material. These positive electrode active materials can be used by disposing a metallic lithium or lithium ion-doped negative electrode active material in the negative electrode in advance and initiating the discharging of the battery. For example, lithium-free metal oxides (MnO₂, V₂O₅ and the like), lithium-free metal sulfides (MoS₂ and the like), lithium-free fluorides (FeF₃, VF₃ and the like) and the like are examples of these positive electrode materials.

### (Conductive assistant)

The conductive assistant is not particularly limited as long as the conductive assistant makes the electron conductivity in the positive electrode active material layers 1B favorable, and a well-known conductive assistant can be used. Examples of the conductive assistant include carbon-based materials such as graphite, carbon black, graphene and carbon nanotubes, metals such as gold, platinum, silver, palladium, aluminum, copper, nickel, stainless steel and iron, conductive oxides such as ITO and mixtures thereof. The conductive assistant may have a form of a powder or a fiber.

### (Binder)

The binder joins the positive electrode current collector layer 1A and the positive electrode active material layer 1B, the positive electrode active material layer 1B and the solid electrolyte layer 3, and a variety of materials that configure the positive electrode active material layer 1B together.

The binder can be used to an extent that the function of the positive electrode active material layer 1B is not lost. The binder may not be contained if not necessary. The amount of the binder in the positive electrode active material layer 1B is, for example, 0.5 to 30 vol% of the positive electrode active material layer. When the amount of the binder is sufficiently small, the resistance of the positive electrode active material layer 1B becomes sufficiently low.

The binder needs to be capable of the above-described joining, and examples thereof include fluororesins such as polyvinylidene fluoride (PVDF) and polytetrafluoroethylene (PTFE). Furthermore, in addition to the above-listed binders, for example, cellulose, styrene-butadiene rubber, ethylene-propylene rubber, polyimide resins, polyamide-imide resins and the like may also be used as the binder. In addition, conductive polymers having electron conductivity or ion-conductive polymers having ion conductivity may also be used as the binder. Examples of the conductive polymers having electron conductivity include polyacetylene and the like. In this case, the binder also exhibits the function of the conductive assistant, and there is thus no need to add the conductive assistant. As the ion-conductive polymers having ion conductivity, for example, polymers that conduct lithium ions or the like can be used, and examples thereof include polymers obtained by compositing a monomer of a polymer compound (a polyether-based polymer compound such as polyethylene oxide, polypropylene oxide or the like, polyphosphazene or the like) and a lithium salt such as LiClO₄, LiBF₄ or LiPF₆ or an alkali metal salt mainly containing lithium. A polymerization initiator that is used for the compositing is, for example, a photopolymerization initiator or thermopolymerization initiator suitable for the above-listed monomers and the like. Examples of characteristics required for the binder include oxidation/reduction resistance and favorable adhesiveness.

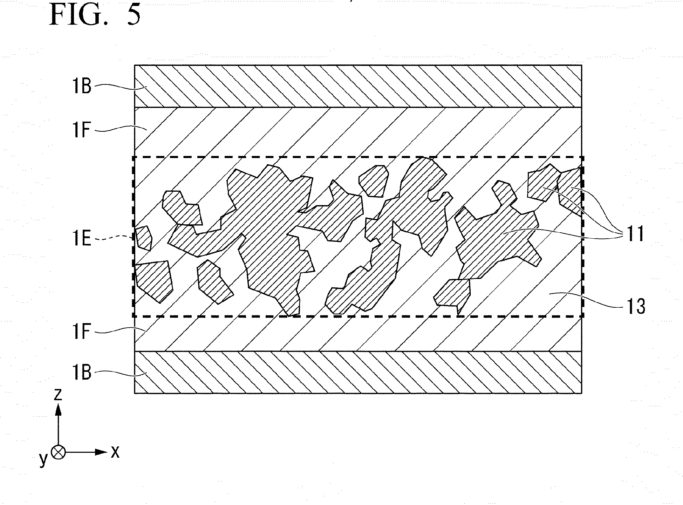

Hitherto, specific examples of one embodiment of the positive electrode have been described, but the positive electrode is not limited to these examples. For example, FIG. 4 and FIG. 5 are cross-sectional views of the positive electrode of other examples according to the first embodiment.

A positive electrode shown in FIG. 4 includes a positive electrode current collector layer 1D and the positive electrode active material layers 1B. The positive electrode current collector layer 1D contains the current collector 11, the positive electrode active material 12 and an oxide 13. The oxide 13 is, for example, a Ag-containing oxide and is, for example, AgCoO₂. The oxide 13 prevents the oxidation of Ag that is contained in the current collector 11. When the oxide 13 is present between the current collector 11 and the positive electrode active material 12, the cycle characteristics of the all-solid-state battery 10 improve.

A positive electrode shown in FIG. 5 includes a positive electrode current collector layer 1E, intermediate layers 1F and the positive electrode active material layers 1B. The positive electrode current collector layer 1E contains the current collector 11 and the oxide 13. The intermediate layer 1F is composed of the oxide 13. The example shown in FIG. 5 corresponds to a case where the thickness of the oxide 13 is thicker than that in the example shown in FIG. 4. The oxide 13 prevents the oxidation of Ag that is contained in the current collector 11, and the cycle characteristics of the all-solid-state battery 10 improve.

### "Solid electrolyte layer"

The solid electrolyte layer 3 contains a solid electrolyte. The solid electrolyte is a substance capable of migrating ions due to an electric field applied from the outside. For example, the solid electrolyte layer 3 conducts lithium ions and impairs the migration of electrons. The solid electrolyte layer 3 is, for example, a sintered body that is obtained by sintering.

The solid electrolyte layer 3 contains a first solid electrolyte having a γ-Li₃PO₄-type crystal structure. The first solid electrolyte is, for example, Li₃₊ₓSiₓP₁₋ₓO₄, Li₃₊ₓSiₓV₁₋ₓO₄, Li₃₊ₓGeₓP₁₋ₓO₄, Li₃₊ₓGeₓV₁₋ₓO₄ or the like. x satisfies 0.2 ≤ x ≤ 0.8. x may satisfy 0.2 ≤ x ≤ 0.6. In addition, the first solid electrolyte may be a ternary lithium oxide containing Si, V, Ge and the like.

### "Negative electrode"

The negative electrode 2 includes, for example, a current collector 21 and a second solid electrolyte 22. In this case, a space between an xy plane that passes through the uppermost part of the current collector 21 and an xy plane that passes through the lowermost part is regarded as the negative electrode 2. The negative electrode 2 may further contain a conductive assistant, a binder or the like.

The current collector 21 is composed of one or more selected from Ag and a Ag-containing alloy. The Ag-containing alloy is, for example, a AgPd alloy or a AgLi alloy. In a case where the current collector 21 is a Ag-containing alloy, the volume ratio of Ag that is contained in the alloy is, for example, 80% or more. The current collector 21 may be a foil that spreads in an xy plane as shown in FIG. 3 or may have, additionally, a form of a punched film or expanded film.

Ag and the Ag-containing alloy are compounds capable of absorbing and releasing ions. Ag and the Ag-containing alloy exhibit a function of a current collector that conducts electrons toward the terminal electrodes 5 and 6 and a function as a negative electrode active material that performs charging and discharging. Therefore, the negative electrode 2 may not contain a composite transition metal oxide, a transition metal fluoride, a polyanion, a transition metal sulfide, a transition metal oxyfluoride, a transition metal oxysulfide, a transition metal oxynitride or the like, which generally functions as a negative electrode active material. When Ag and the Ag-containing alloy having a low potential function as the negative electrode 2, the output voltage from the all-solid-state battery 10 becomes large.

The negative electrode 2 may only contain Ag among Ag and the Ag-containing alloy. The negative electrode 2 may only contain the Ag-containing alloy among Ag and the Ag-containing alloy. The negative electrode 2 may contain both Ag and the Ag-containing alloy among Ag and the Ag-containing alloy.

As the Ag-containing alloy, for example, a Ag-Pd alloy or a Ag-Li alloy can be used.

The volume ratio of the Ag and the Ag alloy relative to a whole of the negative electrode 2 (first volume ratio) may be 45% or more and 95% or less. The volume ratio of the Ag and the Ag alloy may be 50% or more and 90% or less, may be 60% or more and 80% or less or may be 80% or more.

The second solid electrolyte 22 is the same as the first solid electrolyte that is contained in the above-described solid electrolyte layer 3. The volume ratio of the second solid electrolyte 22 that is contained in the negative electrode 2 (second volume ratio) is, for example, 5% or more. The volume ratio of the second solid electrolyte 22 that is contained in the negative electrode 2 may be 5% or more and 55% or less, may be 10% or more and 50% or less or may be 20% or more and 40% or less.

The first solid electrolyte and the second solid electrolyte 22 may include the same constituent element.

The sum of the first volume ratio and the second volume ratio may be 95% or more and 100% or less.

In the negative electrode 2, the current collector 21 and the second solid electrolyte 22 are in direct contact with each other. The contact rate between the current collector 21 and the second solid electrolyte 22 is, for example, 50% or more and preferably 80% or more. The contact rate between the current collector 21 and the second solid electrolyte 22 can be obtained by extracting the current collector 21 at arbitrary 10 points from a cross-sectional image measured with a scanning electron microscope and dividing the length of the contact parts between the current collector 21 and the second solid electrolyte 22 by the outer circumferential length of the current collector 21.

### "Method for manufacturing all-solid-state battery"

Next, a method for manufacturing the all-solid-state battery 10 will be described. First, the laminated body 4 is produced. The laminated body 4 is produced by, for example, a simultaneous sintering method or a sequential sintering method.

The simultaneous sintering method is a method in which a material that configures each layer is laminated and the laminated body 4 is then produced by batch sintering. The sequential sintering method is a method in which sintering is performed whenever each layer is formed. The simultaneous sintering method is capable of producing the laminated body 4 with a smaller number of working steps than the sequential sintering method. In addition, the laminated body 4 produced by the simultaneous sintering method becomes denser than the laminated body 4 produced using the sequential sintering method. Hereinafter, a case where the simultaneous sintering method is used will be described as an example.

First, the materials of the positive electrode current collector layer 1A, the positive electrode active material layer 1B, the solid electrolyte layer 3 and the negative electrode 2, which configure the laminated body 4, are each made into a paste. In the case of the example shown in FIG. 4, a paste is made after the current collector 11 is coated with the oxide 13. In the case of the example shown in FIG. 5, the material that configures the intermediate layer 1F is also made into a paste.

A method for making each material into a paste is not particularly limited, and for example, a method in which the powder of each material is mixed into a vehicle to obtain a paste can be used. The vehicle is a collective term of liquid-phase media. The vehicle includes a solvent or a binder.

Next, a green sheet is produced. The green sheet is obtained by applying the paste produced from each material onto a base material such as a polyethylene terephthalate (PET) film, drying the paste as necessary and then peeling off the base material. A method for applying the paste is not particularly limited, and for example, a well-known method such as screen printing, application, transfer or doctor blade can be used.

Next, the green sheet produced from each material is laminated according to a desired order and the desired number of laminated layers to produce a laminated sheet. Upon laminating the green sheets, alignment, cutting or the like is performed as necessary. For example, in the case of producing a parallel type or serial-parallel type battery, alignment is performed so that the end face of the positive electrode current collector layer 1A and the end face of the negative electrode 2 do not match, and each green sheet is laminated.

The laminated sheet may also be produced using a method in which a positive electrode unit and a negative electrode unit are produced and these units are laminated together. The positive electrode unit is a laminated sheet in which the solid electrolyte layer 3, the positive electrode active material layer 1B, the positive electrode current collector layer 1A and the positive electrode active material layer 1B are laminated in this order. In the case of the example shown in FIG. 5, the intermediate layer 1F is laminated between the positive electrode current collector layer 1A and the positive electrode active material layer 1B. The negative electrode unit is a laminated sheet in which the solid electrolyte layer 3 and the negative electrode 2 are laminated in this order. The electrode units are laminated so that the solid electrolyte layer 3 of the positive electrode unit and the negative electrode 2 of the negative electrode unit face each other or the positive electrode active material layer 1B of the positive electrode unit and the solid electrolyte layer 3 of the negative electrode unit face each other.

Next, the produced laminated sheet is pressurized by batch, and the adhesion of each layer is enhanced. The pressurization can be performed by, for example, mold press, warm isostatic press (WIP), cold isostatic press (CIP), isostatic press or the like. The pressurization is preferably performed together with heating. The heating temperature during crimping is set to be in a range of, for example, 40°C to 95°C. Next, the pressurized laminated body is cut using a dicing device to make into chips. In addition, the chips are subjected to a binder removal treatment and sintering; and thereby, the laminated body 4 made of a sintered body is obtained.

The binder removal treatment can be performed as a step separate from a sintering step. A binder removal step heats and decomposes the binder component that is contained in the chips before the sintering step and makes it possible to suppress the binder component being rapidly decomposed in the sintering step. The binder removal step is performed by, for example, heating the chips in the atmosphere at a temperature of 300°C to 800°C for 0.1 to 10 hours. The atmosphere of the binder removal step is an oxygen partial pressure environment in which the materials that configure the positive electrode, the negative electrode and the solid electrolyte are not oxidized and reduced or less likely to be oxidized and reduced, and the type of the atmosphere gas can be arbitrarily selected so that the materials that configure the positive electrode, the negative electrode and the solid electrolyte and the gas do not react with each other. For example, the binder removal step may be performed in a nitrogen atmosphere, an argon atmosphere, a nitrogen/hydrogen-mixed atmosphere, a water vapor atmosphere or a mixed atmosphere thereof.

For example, the chips mounted on a ceramic stand is subjected to the sintering step. Sintering is performed by, for example, heating the chips to a temperature of 600°C to 1000°C in the atmosphere. The sintering time is set to be, for example, 0.1 to three hours. The atmosphere of the sintering step is an oxygen partial pressure environment in which the materials that configure the positive electrode, the negative electrode and the solid electrolyte are not oxidized and reduced or less likely to be oxidized and reduced, and the type of the atmosphere gas can be arbitrarily selected so that the materials that configure the positive electrode, the negative electrode and the solid electrolyte and the gas do not react with each other. For example, the sintering step may be performed in a nitrogen atmosphere, an argon atmosphere, a nitrogen/hydrogen-mixed atmosphere, a water vapor atmosphere or a mixed atmosphere thereof.

In addition, the sintered laminated body 4 (sintered body) may be put into a cylindrical container together with an abrasive such as alumina, and barrel polishing may be performed. This makes it possible to chamfer the corners of the laminated body. The polishing may be performed using sandblasting. The sandblasting is capable of shaving only a specific part, which is preferable.

The terminal electrodes 5 and 6 are formed on the side surfaces of the produced laminated body 4, which are opposite to each other. The terminal electrodes 5 and 6 can be each formed using a method, for example, a sputtering method, a dipping method, a screen printing method or a spray coating method. The all-solid-state battery 10 can be produced by performing the above-described steps. In a case where the terminal electrodes 5 and 6 are formed only in predetermined parts, the above-described treatment is performed in a state where the predetermined parts are masked with tape or the like.

The all-solid-state battery according to the present embodiment has a high energy density. This is considered to be because Ag and the Ag-containing alloy in the negative electrode 2 function as a negative electrode active material; and thereby the potential of the negative electrode 2 becomes approximately 0 V (vs. Li⁺/Li). The all-solid-state battery 10 is driven with the potential difference between the negative electrode 2 having a potential of approximately 0 V and the positive electrode 1 (LiCoO₂ or LiMn₂O₄) having a potential of approximately 3.6 V (vs. Li⁺/Li); and thereby, the output voltage of the all-solid-state battery becomes large. The energy amount of the all-solid-state battery 10 can be obtained from the product of the output voltage of the all-solid-state battery 10 and the capacity of the all-solid-state battery. The energy amount of the all-solid-state battery 10 can be compared using the energy amount as long as the volume of an all-solid-state battery is the same. Therefore, the all-solid-state battery according to the present embodiment has a high energy density.

When the negative electrode 2 contains lithium titanium oxide (having a potential of approximately 1.5 V (vs. Li⁺/Li)) or the like, there are cases where the above-described output voltage is not realized. The reason therefor is not clear, but is considered that lithium titanium oxide preferentially transfers lithium ions depending on the combination of the configurations that function as negative electrode active materials.

Hitherto, the embodiment of the present invention has been described with reference to the drawings, but each configuration, a combination thereof and the like in each embodiment are simply examples, and the addition, omission, substitution and other modification of the configuration are possible within the scope of the features of the present invention.

### Examples

### "Example 1"

### (Production of positive electrode paste)

For the production of a positive electrode current collector layer paste, a powder obtained by mixing Ag, Pd and LiMn₂O₄ in fractions of 64:16:20 in terms of the volume ratio was used. Ethyl cellulose and dihydroterpineol were added to and mixed with this powder. The ethyl cellulose is a binder, and the dihydroterpineol is a solvent.

A positive electrode active material layer paste was produced by adding and mixing ethyl cellulose and dihydroterpineol to and with LiMn₂O₄.

### (Production of solid electrolyte layer paste)

As starting materials, Li₂CO₃, SiO₂ and Li₃PO₄ were mixed in a mole ratio of 2:1:1. Regarding the mixing, the starting materials were wet-mixed together using water as a dispersion medium and a ball mill for 16 hours. The mixed starting materials were calcined at 950°C for two hours, and Li_{3.5}Si_{0.5}P_{0.5}O₄ was produced. In addition, 100 parts by mass of this calcined powder, 100 parts by mass of ethanol and 200 parts by mass of toluene were charged into the ball mill and wet-mixed together. In addition, 16 parts by mass of a polyvinyl butyral-based binder and 4.8 parts by mass of benzyl butyl phthalate were further charged thereinto and mixed together; and thereby, a solid electrolyte layer paste was produced.

### (Production of negative electrode paste)

For a negative electrode paste, a powder obtained by mixing Ag, Pd and Li_{3.5}Si_{0.5}P_{0.5}O₄ in fractions of 76:19:5 in terms of the volume ratio was used. Ethyl cellulose and dihydroterpineol were added to and mixed with this powder.

### (Production of all-solid-state battery)

Next, a positive electrode unit and a negative electrode unit were produced by the following procedure. First, the positive electrode active material layer paste was printed on the above-described solid electrolyte layer sheet in a thickness of 5 µm using screen printing. Next, the printed positive electrode active material layer paste was dried at 80°C for five minutes. In addition, the positive electrode current collector layer paste was printed on the dried positive electrode active material layer paste in a thickness of 5 µm using screen printing. Next, the printed positive electrode current collector layer paste was dried at 80°C for five minutes. Next, the positive electrode active material layer paste was printed again on the dried positive electrode current collector layer paste in a thickness of 5 µm using screen printing and dried. After that, the PET film was peeled off. A positive electrode unit including a positive electrode active material layer/a positive electrode current collector layer/a positive electrode active material layer laminated in this order on a main surface of a solid electrolyte layer was obtained as described above.

Next, the negative electrode paste was printed on a main surface of a solid electrolyte layer in a thickness of 10 µm. Next, the printed negative electrode paste was dried at 80°C for five minutes.

A solid electrolyte unit was produced by overlapping five solid electrolyte layer sheets. Fifty electrode units (25 positive electrode units and 25 negative electrode units) were alternately laminated with the solid electrolyte unit interposed therebetween; and thereby, a laminated body was produced. At this time, each unit was laminated in a zigzag manner so that odd-numbered electrode units extended only from one end face and even-numbered electrode units extended only from the other end face. Six solid electrolyte layer sheets were laminated on these laminated units. After that, this was subjected to thermo-compression bonding and then cut; and thereby, laminated chips were produced. After that, the laminated chips were simultaneously sintered to obtain a laminated body. For the simultaneous sintering, the chips were heated up to a sintering temperature of 800°C at a rate of temperature increase of 200°C/hour in the atmosphere, held at the temperature for two hours and, after the sintering, naturally cooled.

Terminal electrodes 5 and 6 were attached to the sintered laminated body (sintered body) by a well-known method to produce an all-solid-state battery. The produced all-solid-state battery had a configuration shown in FIG. 2. There was no change in the volume ratio of each layer between a paste state before sintering and a state after sintering. Ag may be present as pure Ag or may be contained as an element contained in a AgPd alloy.

In addition, the output voltage and capacity of the produced all-solid-state battery were measured. The capacity was the discharge capacity, and the discharge capacity (µAh) at the 10^{th} cycle was measured after a cycle of performing constant-current-charging (CC charging) in an environment of 60°C at a constant current of 100 µA until the battery voltage reached 3.9 V and then performing discharging (CC discharging) at a constant current of 100 µA until the battery voltage reached 0 V was repeated 10 times. In addition, the energy amount (µWh) was obtained from the product of the output voltage and capacity of the all-solid-state battery.

### "Examples 2 to 5"

In Examples 2 to 5, the abundance fraction of Li_{3.5}Si_{0.5}P_{0.5}O₄ was changed by changing the added amount of Li_{3.5}Si_{0.5}P_{0.5}O₄ during the production of the negative electrode paste. The other conditions were set in the same manner as in Example 1, and the same measurements as in Example 1 were performed.

### "Examples 6 to 10"

Examples 6 to 10 were each different from Examples 1 to 5 in that a solid electrolyte that was used at the time of producing the solid electrolyte layer paste was changed to Li_{3.5}Si_{0.5}V_{0.5}O₄ and a solid electrolyte that was added to the negative electrode paste was changed to Li_{3.5}Si_{0.5}V_{0.5}O₄. The other conditions were set in the same manner as in Examples 1 to 5, and the same measurements as in Examples 1 to 5 were performed.

### "Example 11"

Example 11 was different from Example 2 in that a powder obtained by mixing Ag, Pd and LiCoO₂ in fractions of 64:16:20 in terms of the volume ratio was used in the production of the positive electrode current collector layer paste and the positive electrode active material layer paste was produced using LiCoO₂ instead of LiMn₂O₄. The other conditions were set in the same manner as in Example 2, and the same measurements as in Example 2 were performed.

### "Examples 12 to 15"

Examples 12 to 15 were different from Example 13 in that the composition ratio of the solid electrolyte that was used at the time of producing the solid electrolyte layer paste was changed. Li_{3.6}Si_{0.6}P_{0.4}O₄ was used as the solid electrolyte in Example 12, Li_{3.4}Si_{0.4}P_{0.6}O₄ was used as the solid electrolyte in Example 13, Li_{3.2}Si_{0.2}P_{0.8}O₄ was used as the solid electrolyte in Example 14, and Li_{3.1}Si_{0.1}P_{0.9}O₄ was used as the solid electrolyte in Example 15. The other conditions were set in the same manner as in Example 11, and the same measurements as in Example 11 were performed.

### "Example 16"

Example 16 was different from Example 11 in that a powder obtained by mixing Ag and Li_{3.5}Si_{0.5}P_{0.5}O₄ in fractions of 80:20 in terms of the volume ratio was used in the production of the negative electrode paste and a powder obtained by mixing Ag and LiCoO₂ in fractions of 80:20 in terms of the volume ratio was used in the production of the positive electrode paste. The other conditions were set in the same manner as in Example 11, and the same measurements as in Example 11 were performed.

### "Examples 17 to 23"

In Examples 17 to 21, the abundance fraction of Li_{3.5}Si_{0.5}P_{0.5}O₄ was changed by changing the added amount of Li_{3.5}Si_{0.5}P_{0.5}O₄ during the production of the negative electrode paste. The other conditions were set in the same manner as in Example 11, and the same measurements as in Example 11 were performed.

### "Example 24"

Example 24 was different from Example 13 in that the composition of the solid electrolyte that was used at the time of producing the negative electrode paste was changed to Li_{3.4}Si_{0.4}P_{0.6}O₄.

### "Example 25"

Example 25 was different from Example 29 in that the solid electrolyte that was used at the time of producing the solid electrolyte paste was changed to Li_{3.3}Si_{0.3}P_{0.7}O₄.

### "Example 26"

Example 26 was different from Example 12 in that the composition of the solid electrolyte that was used at the time of producing the negative electrode paste was changed to Li_{3.6}Si_{0.6}P_{0.4}O₄.

### "Examples 27 to 30"

Examples 27 to 30 were different from Example 11 in that the composition ratio of the solid electrolyte that was used at the time of producing the negative electrode paste was changed. Li_{3.4}Si_{0.4}P_{0.6}O₄ was used as the solid electrolyte in Example 27, Li_{3.6}Si_{0.6}P_{0.4}O₄ was used as the solid electrolyte in Example 28, Li_{3.3}Si₀.₃P_{0.7}O₄ was used as the solid electrolyte in Example 29 and Li_{3.2}Si_{0.2}P_{0.8}O₄ was used as the solid electrolyte in Example 30. The other conditions were set in the same manner as in Example 11, and the same measurements as in Example 11 were performed.

### "Example 31"

Example 31 was different from Example 11 in that the solid electrolyte that was used at the time of producing the negative electrode paste was changed to Li_{3.5}Si_{0.5}P_{0.5}O₄. The other conditions were set in the same manner as in Example 11, and the same measurements as in Example 11 were performed.

In Example 32 and Example 33, a Li-Ag alloy was added to the negative electrode current collector layer, and the same studies were performed. The Li-Ag alloy was handled in a globe box with a dew point of -50°C, and for simultaneous sintering, chips were heated up to a sintering temperature of 800°C at a rate of temperature increase of 1200°C/hour in an argon atmosphere, held at the temperature for 20 minutes and, after the sintering, naturally cooled.

### "Example 32 and Example 33"

Example 32 was different from Example 15 in that a part of Ag was changed to a Li-Ag alloy (Li_{3.1}Ag) at the time of producing the negative electrode current collector layer. The amount of Li in the Li-Ag alloy was obtained by the quantitative analysis of X-ray diffraction (XRD). Regarding the other conditions, the same measurements as in Example 1 were performed.

Example 33 was different from Example 15 in that a part of Ag was changed to a Li-Ag alloy (Li_{4.7}Ag) at the time of producing the negative electrode current collector layer. The amount of Li in the Li-Ag alloy was obtained by the quantitative analysis of X-ray diffraction (XRD). Regarding the other conditions, the same measurements as in Example 1 were performed.

### "Comparative Example 1"

Comparative Example 1 was different from Example 1 in that Li_{3.5}Si_{0.5}P_{0.5}O₄ was not added at the time of producing the negative electrode paste. The volume ratio between Ag and Pd was set to 80:20. The other conditions were set in the same manner as in Example 1, and the same measurements as in Example 1 were performed.

### "Comparative Example 2"

Comparative Example 2 was different from Example 6 in that Li_{3.5}Si_{0.5}V_{0.5}O₄ was not added at the time of producing the negative electrode paste. The volume ratio between Ag and Pd was set to 80:20. The other conditions were set in the same manner as in Example 6, and the same measurements as in Example 6 were performed.

### "Comparative Example 3"

In Comparative Example 3, a negative electrode was composed of a negative electrode current collector layer and negative electrode active material layers, and this negative electrode unit was produced by laminating the negative electrode active material layer, the negative electrode current collector layer and the negative electrode active material layer in this order on a main surface of a solid electrolyte layer. At the time of producing a paste for the negative electrode current collector layer, a powder obtained by mixing Ag and Pd in fractions of 80:20 in terms of the volume ratio was used and made into a AgPd alloy. A negative electrode active material layer paste was produced by adding and mixing ethyl cellulose and dihydroterpineol to and with Li₄Ti₅O₁₂ (Li_{4/3}Ti_{5/3}O₄). The other conditions were set in the same manner as in Example 1, and the same measurements as in Example 1 were performed.

### "Comparative Example 4"

Comparative Example 4 was different from Example 2 in that Li₄Ti₅O₁₂ (Li_{4/3}Ti_{5/3}O₄) was added instead of Li_{3.5}Si_{0.5}P_{0.5}O₄ at the time of producing the negative electrode paste. For the production of the negative electrode paste, Ag, Pd and Li_{4/3}Ti_{5/3}O₄ were mixed in fractions of 64:16:20 in terms of the volume ratio. The other conditions were set in the same manner as in Example 1, and the same measurements as in Example 1 were performed.

### "Comparative Example 5"

Comparative Example 5 was different from Example 2 in that the composition ratio of the solid electrolyte that was used at the time of producing the solid electrolyte layer paste was changed. Li_{3.1}Si_{0.1}P_{0.9}O₄ was used as the solid electrolyte in Comparative Example 5. The solid electrolyte did not have a γ-Li3PO₄-type crystal structure but had a Li₄SiO₄-type crystal structure. The other conditions were set in the same manner as in Example 1, and the same measurements as in Example 1 were performed.

### "Comparative Example 6"

Comparative Example 6 was different from Example 16 in that the solid electrolyte layer was Li₄Ti₅O₁₂ and was not a first solid electrolyte having a γ-Li₃PO₄-type crystal structure.

### "Comparative Example 7"

Comparative Example 7 was different from Example 16 in that the solid electrolyte that was contained in the negative electrode was Li₄Ti₅O₁₂ and was not a second solid electrolyte having a γ-Li₃PO₄-type crystal structure.

### "Comparative Example 8"

In Comparative Example 8, a negative electrode was composed of a negative electrode current collector layer and negative electrode active material layers, and this negative electrode unit was produced by laminating the negative electrode active material layer, the negative electrode current collector layer and the negative electrode active material layer in this order on a main surface of a solid electrolyte layer. At the time of producing a paste for the negative electrode current collector layer, a powder obtained by mixing Ag and Pd in fractions of 80:20 in terms of the volume ratio was used and made into a AgPd alloy. A negative electrode active material layer paste was produced by adding and mixing ethyl cellulose and dihydroterpineol to and with Li₄Ti₅O₁₂ (Li_{4/3}Ti_{5/3}O₄). The other conditions were set in the same manner as in Example 16, and the same measurements as in Example 16 were performed.

The results of Examples 1 to 33 and Comparative Examples 1 to 8 were summarized in Table 1 to Table 3 below.

**[Table 1]**

| | Positive electrode current collector layer | Positive electrode active material layer | Solid electrolyte layer | Negative electrode | | Voltage (V) | Capacity (uAh) | Energy amount (uWh) |
|---|---|---|---|---|---|---|---|---|
| Example 1 | Ag/Pd/LiMn₂O₄ = 64/16/20 | LiMn₂O₄ | Li_{3.5}Si_{0.5}P_{0.5}O₄ | (Ag/Pd)/Li_{3.5}Si_{0.5}P_{0.5}O₄ = (76/19)/5 | | 3.5 | 228.1 | 798.4 |
| Example 2 | Ag/Pd/LiMn₂O₄ = 64/16/20 | LiMn₂O₄ | Li_{3.5}Si_{0.5}P_{0.5}O₄ | (Ag/Pd)/Li_{3.5}Si_{0.5}P_{0.5}O₄ = (64/16)/20 | | 3.5 | 230.2 | 805.7 |
| Example 3 | Ag/Pd/LiMn₂O₄ = 64/16/20 | LiMn₂O₄ | Li_{3.5}Si_{0.5}P_{0.5}O₄ | (Ag/Pd)/Li_{3.5}Si_{0.5}P_{0.5}O₄ = (48/12)/40 | | 3.5 | 235.3 | 823.6 |
| Example 4 | Ag/Pd/LiMn₂O₄ = 64/16/20 | LiMn₂O₄ | Li_{3.5}Si_{0.5}P_{0.5}O₄ | (Ag/Pd)/Li_{3.5}Si_{0.5}P_{0.5}O₄ = (32/8)/55 | | 3.5 | 230.8 | 807.8 |
| Example 5 | Ag/Pd/LiMn₂O₄ = 64/16/20 | LiMn₂O₄ | Li_{3.5}Si_{0.5}P_{0.5}O₄ | (Ag/Pd)/Li_{3.5}Si_{0.5}P_{0.5}O₄ = (16/4)/60 | | 3.5 | 171.2 | 599.2 |
| Comparative Example 1 | Ag/Pd/LiMn₂O₄ = 64/16/20 | LiMn₂O₄ | Li_{3.5}Si_{0.5}P_{0.5}O₄ | Ag/Pd=80/20 | | 3.5 | 105.9 | 370.7 |
| Comparative Example 3 | Ag/Pd/LiMn₂O₄ = 64/16/20 | LiMn₂O₄ | Li_{3.5}Si_{0.5}P_{0.5}O₄ | Li_{4/3}Ti_{5/3}O₄ | Ag/Pd = 80/20 | 2.3 | 100.7 | 231.6 |
| Comparative Example 4 | Ag/Pd/LiMn₂O₄ = 64/16/20 | LiMn₂O₄ | Li_{3.5}Si_{0.5}P_{0.5}O₄ | AgPd/Li_{4/3}Ti_{5/3}O₄ = (64/16)/20 | | 2.3 | 30.2 | 69.5 |
| Example 6 | Ag/Pd/LiMn₂O₄ = 64/16/20 | LiMn₂O₄ | Li_{3.5}Si_{0.5}P_{0.5}O₄ | (Ag/Pd)/Li_{3.5}Si_{0.5}P_{0.5}O₄ = (76/19)/5 | | 3.5 | 150.1 | 525.4 |
| Example 7 | Ag/Pd/LiMn₂O₄ = 64/16/20 | LiMn₂O₄ | Li_{3.5}Si_{0.5}P_{0.5}O₄ | (Ag/Pd)/Li_{3.5}Si₀.₅P_{0.5}O₄ = (64/16)/20 | | 3.5 | 215.2 | 753.2 |
| Example 8 | Ag/Pd/LiMn₂O₄ = 64/16/20 | LiMn₂O₄ | Li_{3.5}Si_{0.5}P_{0.5}O₄ | (Ag/Pd)/Li_{3.5}Si_{0.5}P_{0.5}O₄ = (48/12)/40 | | 3.5 | 220.1 | 770.4 |
| Example 9 | Ag/Pd/LiMn₂O₄ = 64/16/20 | LiMn₂O₄ | Li_{3.5}Si_{0.5}P_{0.5}O₄ | (Ag/Pd)/Li_{3.5}Si₀.₅P_{0.5}O₄ = (32/8)/55 | | 3.5 | 220.6 | 772.1 |
| Example 10 | Ag/Pd/LiMn₂O₄ = 64/16/20 | LiMn₂O₄ | Li_{3.5}Si_{0.5}P_{0.5}O₄ | (Ag/Pd)/Li_{3.5}Si_{0.5}P_{0.5}O₄ = (16/4)/60 | | 3.5 | 155.4 | 753.9 |
| Comparative Example 2 | Ag/Pd/LiMn₂O₄ = 64/16/20 | LiMn₂O₄ | Li_{3.5}Si_{0.5}P_{0.5}O₄ | Ag/Pd=80/20 | | 3.5 | 100.5 | 351.8 |

**[Table 2]**

| | Positive electrode current collector layer | Positive electrode active material layer | Solid electrolyte layer/first solid electrolyte | Negative electrode/second solid electrolyte | | Voltage (V) | Capacity (uAh) | Energy amount (uWh) |
|---|---|---|---|---|---|---|---|---|
| Example 11 | Ag/Pd/LiCoO₂ = 64/16/20 | LiCoO₂ | Li_{3.5}Si_{0.5}P_{0.5}O₄ | (Ag/Pd)/Li_{3.5}Si_{0.5}P_{0.5}O₄ = (64/16)/20 | | 3.5 | 550.3 | 1926.1 |
| Example 12 | Ag/Pd/LiCoO₂ = 64/16/20 | LiCoO₂ | Li_{3.6}Si_{0.6}P_{0.4}O4 | (Ag/Pd)/Li_{3.5}Si_{0.5}P_{0.5}O₄ = (64/16)/20 | | 3.5 | 550.2 | 1925.7 |
| Example 13 | Ag/Pd/LiCoO₂ = 64/16/20 | LiCoO₂ | Li_{3.4}Si_{0.4}P_{0.6}O₄ | (Ag/Pd)/Li_{3.5}Si_{0.5}P_{0.5}O₄ = (64/16)/20 | | 3.5 | 541.1 | 1893.9 |
| Example 16 | Ag/LiCoO₂ = 80/20 | LiCoO₂ | Li_{3.5}Si_{0.5}P_{0.5}O₄ | Ag/Li_{3.5}Si_{0.5}P_{0.5}O₄ = 80/20 | | 3.5 | 532.0 | 1862.0 |
| Example 14 | Ag/Pd/LiCoO₂ = 64/16/20 | LiCoO₂ | Li_{3.2}Si_{0.2}P_{0.8}O₄ | (Ag/Pd)/Li_{3.5}Si_{0.5}P_{0.5}O₄ = (64/16)/20 | | 3.5 | 502.1 | 1757.4 |
| Example 15 | Ag/Pd/LiCoO₂ = 64/16/20 | LiCoO₂ | Li_{3.1}Si_{0.1}P_{0.9}O₄ | (Ag/Pd)/Li_{3.5}Si_{0.5}P_{0.5}O₄ = (64/16)/20 | | 3.5 | 352.1 | 1232.4 |
| Comparative Example 6 | Ag/Pd/LiCoO₂ = 64/16/20 | LiCoO₂ | Li₄Ti₅O₁₂ | (Ag/Pd)/Li_{3.5}Si_{0.5}P_{0.5}O₄ = (64/16)/20 | | 2.1 | 13.1 | 27.5 |
| Comparative Example 7 | Ag/Pd/LiCoO₂ = 64/16/20 | LiCoO₂ | Li_{3.5}Si_{0.5}P_{0.5}O₄ | (AgPd)/Li₄Ti₅O₁₂ = (64/16)/20 | | 2.1 | 140.1 | 294.2 |
| Comparative Example 8 | Ag/Pd/LiCoO₂ = 64/16/20 | LiCoO₂ | Li_{3.5}Si_{0.5}P_{0.5}O₄ | Li_{4/3}Ti_{5/3}O₄ | Ag/Pd = 80/20 | 2.1 | 146.3 | 307.2 |
| Example 17 | Ag/Pd/LiCoO₂ = 64/16/20 | LiCoO₂ | Li_{3.5}Si_{0.5}P_{0.5}O₄ | (Ag/Pd)/Li_{3.5}Si_{0.5}P_{0.5}O₄ = (76/19)/5 | | 3.5 | 541.3 | 1894.6 |
| Example 18 | Ag/Pd/LiCoO₂ = 64/16/20 | LiCoO₂ | Li_{3.5}Si_{0.5}P_{0.5}O₄ | (Ag/Pd)/Li_{3.5}Si_{0.5}P_{0.5}O₄ = (76/20)/4 | | 3.5 | 501.6 | 1755.6 |
| Example 19 | Ag/Pd/LiCoO₂ = 64/16/20 | LiCoO₂ | Li_{3.5}Si_{0.5}P_{0.5}O₄ | (Ag/Pd)/Li_{3.5}Si_{0.5}P_{0.5}O₄ = (48/12)/40 | | 3.5 | 552.5 | 1933.8 |
| Example 20 | Ag/Pd/LiCoO₂ = 64/16/20 | LiCoO₂ | Li_{3.5}Si_{0.5}P_{0.5}O₄ | (Ag/Pd)/Li_{3.5}Si_{0.5}P_{0.5}O₄ = (36/9)/55 | | 3.5 | 553.2 | 1936.2 |
| Example 21 | Ag/Pd/LiCoO₂ = 64/16/20 | LiCoO₂ | Li_{3.5}Si_{0.5}P_{0.5}O₄ | (Ag/Pd)/Li_{3.5}Si_{0.5}P_{0.5}O₄ = (32/8)/60 | | 3.5 | 489.9 | 1714.7 |
| Example 22 | Ag/Pd/LiCoO₂ = 64/16/20 | LiCoO₂ | Li_{3.5}Si_{0.5}P_{0.5}O₄ | (Ag/Pd)/Li_{3.5}Si_{0.5}P_{0.5}O₄ = (72/18)/10 | | 3.5 | 551.8 | 1931.3 |
| Example 23 | Ag/Pd/LiCoO₂ = 64/16/20 | LiCoO₂ | Li_{3.5}Si_{0.5}P_{0.5}O₄ | (Ag/Pd)/Li_{3.5}Si_{0.5}P_{0.5}O₄ = (40/10)/50 | | 3.5 | 553.4 | 1936.9 |

**[Table 3]**

| | Positive electrode current collector layer | Positive electrode active material layer | Solid electrolyte layer/first solid electrolyte | Negative electrode/second solid electrolyte | Voltage (V) | Capacity (uAh) | Energy amount (uWh) |
|---|---|---|---|---|---|---|---|
| Example 24 | Ag/Pd/LiCoO₂ = 64/16/20 | LiCoO₂ | Li_{3.4}Si_{0.4}P_{0.6}O₄ | (Ag/Pd)/Li_{3.4}Si_{0.4}P_{0.6}O₄ = (64/16)/20 | 3.5 | 552.1 | 1932.4 |
| Example 25 | Ag/Pd/LiCoO₂ = 64/16/20 | LiCoO₂ | Li_{3.3}Si_{0.3}P_{0.7}O₄ | (Ag/Pd)/Li_{3.3}Si_{0.3}P_{0.7}O₄ = (64/16)/20 | 3.5 | 539.1 | 1886.9 |
| Example 26 | Ag/Pd/LiCoO₂ = 64/16/20 | LiCoO₂ | Li_{3.6}Si_{0.6}P_{0.4}O₄ | (Ag/Pd)/Li_{3.6}Si_{0.6}P_{0.4}O₄ = (64/16)/20 | 3.5 | 557.2 | 1950.2 |
| Example 27 | Ag/Pd/LiCoO₂ = 64/16/20 | LiCoO₂ | Li_{3.5}Si_{0.5}P_{0.5}O₄ | (Ag/Pd)/Li_{3.4}Si_{0.4}P_{0.6}O₄ = (64/16)/20 | 3.5 | 544.7 | 1906.5 |
| Example 28 | Ag/Pd/LiCoO₂ = 64/16/20 | LiCoO₂ | Li_{3.5}Si_{0.5}P_{0.5}O₄ | (Ag/Pd)/Li_{3.6}Si_{0.6}P_{0.4}O₄ = (64/16)/20 | 3.5 | 538.1 | 1883.4 |
| Example 29 | Ag/Pd/LiCoO₂ = 64/16/20 | LiCoO₂ | Li_{3.5}Si_{0.5}P_{0.5}O₄ | (Ag/Pd)/Li_{3.3}Si_{0.3}P_{0.7}O₄ = (64/16)/20 | 3.5 | 508.2 | 1778.7 |
| Example 30 | Ag/Pd/LiCoO₂ = 64/16/20 | LiCoO₂ | Li_{3.5}Si_{0.5}P_{0.5}O₄ | (Ag/Pd)/Li_{3.2}Si_{0.2}P_{0.8}O₄ = (64/16)/20 | 3.5 | 502.1 | 1757.4 |
| Example 31 | Ag/Pd/LiCoO₂ = 64/16/20 | LiCoO₂ | Li_{3.5}Si_{0.5}P_{0.5}O₄ | (Ag/Pd)/Li_{3.5}Si₀.₅P_{0.5}O₄ = (64/16)/20 | 3.5 | 521.5 | 1825.3 |
| Example 32 | Ag/Pd/LiCoO₂ = 64/16/20 | LiCoO₂ | Li_{3.5}Si_{0.5}P_{0.5}O₄ | (Li_{3.1}Ag/Ag)/Li_{3.5}Si_{0.5}P_{0.5}O₄ = (5/75)/20 | 3.5 | 621.1 | 2173.9 |
| Example 33 | Ag/Pd/LiCoO₂ = 64/16/20 | LiCoO₂ | Li_{3.5}Si_{0.5}P_{0.5}O₄ | (Li_{4.7}Ag/Ag)/Li_{3.5}Si_{0.5}P_{0.5}O₄ = (3/77)/20 | 3.6 | 643.9 | 2318.0 |

Compared with Comparative Examples 1 to 5, the amounts of energy output were large in Examples 1 to 33. Since the samples of the same size were prepared in Examples 1 to 33 and Comparative Examples 1 to 8, the densities of energy output were high in Examples 1 to 33 compared with Comparative Examples 1 to 8.

In Comparative Example 1 and Comparative Example 2, since the AgPd alloys functioned as the negative electrode active materials, the output voltages were large. On the other hand, in Comparative Example 1 and Comparative Example 2, the contact areas between the solid electrolyte and the AgPd alloy were limited, and sufficient capacities could not be obtained. As a result, sufficient energy amounts could not be obtained in Comparative Example 1 and Comparative Example 2 compared with Examples 1 and 14.

In Comparative Example 3 and Comparative Example 4, since Li_{4/3}Ti_{5/3}O₄ that functioned as the negative electrode active materials was contained in the negative electrodes, Li_{4/3}Ti_{5/3}O₄ worked more preferentially than the AgPd alloy, and sufficient output voltages could not be obtained. As a result, it is considered that sufficient energy amounts could not be obtained in Comparative Examples 3 and 4 compared with Examples 1 and 14.

In Comparative Example 5, the solid electrolyte layer did not have a γ-Li₃PO₄-type crystal structure but had a Li₄SiO₄-type crystal structure. The Li₄SiO₄-type crystal structure had poor ion conductivity compared with the γ-Li₃PO₄-type crystal structure and was not capable of propagating sufficient lithium ions to negative electrodes, and it is considered that a sufficient capacity could not be obtained. As a result, it is considered that a sufficient energy amount could not be obtained in Comparative Example 5 compared with Examples 1 and 14.

In Comparative Examples 6 to 8, any one of the following three facts was not satisfied, that is, the fact that the solid electrolyte layer included the first solid electrolyte having a γ-Li₃PO₄-type crystal structure, the fact that the negative electrode included the second solid electrolyte having a γ-Li₃PO₄-type crystal structure and the fact that the negative electrode included one or more selected from Ag and a Ag-containing alloy, and it is thus considered that the capacities and the energy amounts significantly decreased.

### Industrial Applicability

It is possible to provide an all-solid-state battery having a higher energy density than ever.

### Reference Signs List

1 Positive electrode
1A, 1C, 1D, 1E Positive electrode current collector layer
1B Positive electrode active material layer
1F Intermediate layer
2 Negative electrode
3 Solid electrolyte layer
4 Laminated body
5, 6 Terminal electrode
10 All-solid-state battery
11, 21 Current collector
12 Positive electrode active material
13 Oxide
22 Second solid electrolyte

## Claims

1. An all-solid-state battery comprising:
a sintered body including a positive electrode, a negative electrode and a solid electrolyte layer between the positive electrode and the negative electrode,
wherein the solid electrolyte layer contains a first solid electrolyte having a γ-Li₃PO₄-type crystal structure, and
the negative electrode contains a second solid electrolyte having a γ-Li₃PO₄-type crystal structure and one or more selected from Ag and a Ag-containing alloy.

2. The all-solid-state-battery according to Claim 1,
wherein a volume ratio of the second solid electrolyte relative to a whole of the negative electrode is 5% or more and 55% or less.

3. The all-solid-state-battery according to any one of Claims 1 to 3,
wherein the first solid electrolyte contains Li₃₊ₓSiₓP₁₋ₓO₄ (0.2 ≤ x ≤ 0.6).

4. The all-solid-state-battery according to Claim 1,
wherein the second solid electrolyte contains Li₃₊ₓSiₓP₁₋ₓO₄ (0.2 ≤ x ≤ 0.6).

5. The all-solid-state-battery according to Claim 1,
wherein the first solid electrolyte and the second solid electrolyte include the same constituent element.

6. The all-solid-state-battery according to Claim 1,
wherein a total volume ratio of the Ag and the Ag-containing alloy relative to a whole of the negative electrode is 45% or more and 95% or less.

7. The all-solid-state-battery according to Claim 1,
wherein a sum of the volume ratio of the solid electrolyte and the total volume ratio of the Ag and the Ag-containing alloy relative to a whole of the negative electrode is 95% or more and 100% or less.

8. The all-solid-state-battery according to Claim 1,
wherein the Ag-containing alloy is a Li-Ag alloy.

9. The all-solid-state-battery according to Claim 1 or 2,
wherein the positive electrode contains lithium cobaltate.

10. The all-solid-state-battery Claim 8,
wherein the positive electrode includes a current collector layer containing Ag and a positive electrode active material layer that is in contact with at least one main surface of the current collector layer.
